# EUROPÄISCHE PATENTSCHRIFT

(11) **EP 3 703 903 B1**
(45) Veröffentlichungstag und Bekanntmachung des Hinweises auf die Patenterteilung: **06.12.2023**
(21) Anmeldenummer: 18785912.9
(22) Anmeldetag: 09.10.2018
(51) Int. Cl.: B23Q 11/00

(54) **ABSAUGAUFSATZ**
SUCTION-EXTRACTION ATTACHMENT
ADAPTATEUR D'ASPIRATION

(30) Priorität: 30.10.2017 DE 102017219449
(43) Veröffentlichungstag der Anmeldung: 09.09.2020
(73) Patentinhaber: Robert Bosch GmbH, 70442 Stuttgart (DE)
(72) Erfinder: SONNTAG, Stefan, 88267 Vogt (DE)
(86) Internationale Anmeldenummer: PCT/EP2018/077393
(87) Internationale Veröffentlichungsnummer: WO 2019/086211

(56) Entgegenhaltungen:
- EP-A1- 0 799 674
- EP-A1- 2 567 779
- WO-A1-2016/049667
- DD-A1- 278 079
- GB-A- 2 005 403
- US-A- 5 033 917
- US-A1- 2015 040 341
- US-A1- 2017 203 402

## Beschreibung

### Stand der Technik

Die Erfindung betrifft einen Absaugaufsatz für ein Einsatzwerkzeug gemäß dem Oberbegriff des Anspruchs 1 umfassend ein Gehäuse mit einer stirnseitigen Öffnung, die zur Aufnahme des Einsatzwerkzeugs ausgebildet ist, eine Lagereinheit zur Lagerung des Absaugaufsatzes am Einsatzwerkzeug, eine Absaugöffnung zur Kopplung des Absaugaufsatzes mit einer Absaugvorrichtung, wobei die stirnseitige Öffnung und die Absaugöffnung einen Transportkanal bilden. Ein solcher Absaugaufsatz ist aus der WO 2016/049667 A1 bekannt.

In der DE 10 2005 062 888 A1 ist ein Staubauffangsatz zur Verbindung mit einer Absaugeinrichtung beschrieben, die zum Auffangen von Bohrstaub bei Bohrarbeiten vorgesehen ist. Der Staubauffangsatz wird an der Handwerkzeugmaschine befestigt.

### Offenbarung der Erfindung

Erfindungsgemäß wird ein Absaugaufsatz mit den Merkmalen des Anspruchs 1 definiert. Bevorzugte Ausführungsformen der vorliegenden Erfindung sind in den abhängigen Ansprüche definiert.

Ausgehend vom Stand der Technik wird vorgeschlagen, dass der Absaugaufsatz mittels der Lagereinheit derart axial beweglich und drehbar auf dem Einsatzwerkzeug gelagert ist, dass sich die Position des Absaugaufsatzes relativ zum Einsatzwerkzeug mit einer zunehmenden Bohrlochtiefe ändert. Vorteilhaft kann dadurch ein optimales Absaugergebnis mit einem sehr einfach aufgebauten Absaugaufsatz erzielt werden.

Das Einsatzwerkzeug kann beispielsweise als ein Bohrwerkzeug, insbesondere als ein Gesteins-, Holz- oder Metallbohrer, als ein Meißel, etc. ausgebildet sein.

Das Einsatzwerkzeug ist insbesondere als ein Bohrwerkzeug ausgebildet, das für einen Bohrhammer oder eine Schlagbohrmaschine vorgesehen ist. Das Einsatzwerkzeug weist entlang seiner Längsachse ein Einsteckende, einen Schaftbereich und einen Bohrkopf auf. An seinem dem Bohrkopf abgewandten Ende weist das Einsatzwerkzeug das Einsteckende auf, das zur Kopplung mit der Handwerkzeugmaschine ausgebildet ist. Vorzugsweise ist das Einsatzwerkzeug im Bereich des Einsteckendes derart ausgebildet, dass das Einsatzwerkzeug mit einer Werkzeugaufnahme der Handwerkzeugmaschine koppelbar ist. Beispielhaft kann das Einsatzwerkzeug im Bereich des Einsteckendes als spezielle Nuten ausgebildete Formschlusselemente aufweisen, die eine SDS-plus-Schnittstelle oder eine SDS-max-Schnittstelle bilden. Zur Bearbeitung eines Werkstücks wird das Einsatzwerkzeug mittels der Handwerkzeugmaschine in einen rotierenden und/oder linear oszillierenden bzw. schlagenden Zustand versetzt. Das Bohrwerkzeug dringt während der Bearbeitung in Vorschubrichtung des Bohrwerkzeugs in das Werkstück ein. Die Längsachse des Bohrwerkzeugs entspricht insbesondere einer Arbeits- oder Rotationsachse des Bohrwerkzeugs. Unter einem Bohrkopf soll in diesem Zusammenhang insbesondere ein Bereich des Bohrwerkzeugs verstanden werden, der zumindest einen Schneidkörper aufweist. Der Schneidkörper weist zumindest ein Schneidelement auf. Das zumindest eine Schneidelement ist insbesondere aus einem Hartmetall ausgebildet. Vorzugsweise ist der Außendurchmesser des Bohrkopfs größer als der Außendurchmesser des Schaftbereichs. Der Außendurchmesser des Bohrkopfs wird insbesondere durch zumindest einen Schneidkörper gebildet.

Das Gehäuse des Absaugaufsatzes kann einteilig oder mehrteilig ausgebildet sein. In der einteiligen Bauart ist der Absaugaufsatz mit dem Einsatzwerkzeug insbesondere über ein Aufschieben verbindbar. Der Absaugaufsatz kann mit der stirnseitigen Öffnung voran über das Einsteckende oder mit der rückseitigen Öffnung voran über den Bohrkopf aufgeschoben werden. Die stirnseitige Öffnung ist im verbundenen Zustand dem Bohrkopf des Einsatzwerkzeugs zugewandt. Ist das Gehäuse mehrteilig, beispielsweise zweiteilig und über ein Scharnier verbunden, ausgebildet, wäre auch denkbar, dass der Absaugaufsatz über den Schaftbereich des Einsatzwerkzeugs mit diesem verbunden wird. Beispielhaft kann der Absaugaufsatz zur Verbindung um den Schaftbereich geklappt werden und mittels Verbindungselemente in der befestigten Position einschnappen.

Im verbundenen Zustand wird der Freiheitsgrad der Bewegung des Absaugaufsatzes durch die Lagereinheit vorzugsweise auf zwei beschränkt. Insbesondere weist der Absaugaufsatz auf dem Bohrwerkzeug einen translatorischen Freiheitsgrad und einen rotatorischen Freiheitsgrad auf. Insbesondere ist der rotatorische Freiheitsgrad senkrecht zu dem translatorischen Freiheitsgrad ausgebildet.

Die Absaugöffnung ist vorzugsweise einstückig mit dem Gehäuse ausgebildet. Die Absaugöffnung kann beispielsweise als ein Anschlussstutzen oder eine andere dem Fachmann bekannte Vorrichtung zum Verbinden eines Gehäuses mit einer Absaugvorrichtung bzw. eines Saugschlauchs ausgebildet sein. Der Querschnitt bzw. der Durchmesser der Absaugöffnung entspricht im Wesentlichen dem Querschnitt bzw. dem Durchmesser der stirnseitigen Öffnung. Insbesondere ist der Querschnitt bzw. der Durchmesser der stirnseitigen Öffnung nur unwesentlichen kleiner, als der Querschnitt bzw. der Durchmesser der Absaugöffnung ausgebildet, um einen möglichst hohen Luftvolumenstrom im Transportkanal zu gewährleisten. Die Lagereinheit ist zumindest teilweise im Transportkanal angeordnet. Der Transportkanal kann ein geradliniges oder ein gekrümmtes Profil aufweisen.

Des Weiteren wird vorgeschlagen, dass die stirnseitige Öffnung eine im Wesentlichen ebene Anlagefläche aufweist und die Anlagefläche eine Längsachse des Absaugaufsatzes umschließt, wobei die Längsachse einer Arbeitsachse des Einsatzwerkzeugs entspricht. Vorteilhaft kann durch die Anlagefläche die Ergonomie des Absaugaufsatzes verbessert werden. Vorzugsweise erstreckt sich die Anlagefläche insbesondere senkrecht zu der Längsachse.

Weiterhin wird vorgeschlagen, dass das Gehäuse im Bereich der stirnseitigen Öffnung zumindest eine Aussparung aufweist, die die Anlagefläche unterbricht. Vorteilhaft kann durch die Aussparung der Luftvolumenstrom im Transportkanal vergrößert werden. Insbesondere wird durch die Aussparung ein Bereich gebildet, über die der Absaugaufsatz, insbesondere das Gehäuse des Absaugaufsatzes, von einem ebenen Werkstück während der Bearbeitung beabstandet ist. Vorzugsweise ist die Aussparung auf einer der Absaugöffnung abgewandten Seite des Absaugaufsatzes angeordnet.

Zudem wird vorgeschlagen, dass die Aussparung einen Mittelpunktswinkel um die Längsachse von zumindest 10°, insbesondere zumindest 30°, vorzugsweise zumindest 60°, bevorzugt zumindest 90°, einnimmt. Vorteilhaft kann dadurch ein ausreichend großer Luftvolumenstrom im Transportkanal realisiert werden. Der Absaugaufsatz kann eine einzelne größere Aussparung mit einem Mittelpunktswinkel von über 60° oder mehrere kleinere Aussparungen mit jeweils einem Mittelpunktswinkel von höchstens 60° aufweisen. Es ist ebenfalls denkbar, größere und kleinere Aussparungen zu kombinieren. Es sind unterschiedliche Anordnungen für die mehreren Aussparungen denkbar, unter anderem, benachbart zu einander, gleichmäßig zueinander beabstandet, rotationssymmetrisch oder spiegelsymmetrisch zur Längsachse angeordnet, oder dergleichen.

Des Weiteren wird vorgeschlagen, dass die Anlagefläche durch zumindest eine senkrecht zu der Längsachse verlaufenden Gerade zweimal geschnitten wird. Insbesondere ist die Anlagefläche derart ausgebildet, dass sie zusätzlich durch eine weitere Gerade, die senkrecht zu der ersten Geraden verläuft, zweimal geschnitten wird. Vorteilhaft kann dadurch ein sicherer Halt des Absaugaufsatzes an dem Werkstück ohne ein Verkippen realisiert werden.

Weiterhin wird vorgeschlagen, dass die Anlagefläche kreisförmig oder ovalförmig ausgebildet ist. Insbesondere ist die Anlagefläche zumindest teilweise konkav ausgebildet.

Zudem wird vorgeschlagen, dass das Gehäuse im Bereich der stirnseitigen Öffnung ein Fixierungselement aufweist, das dazu ausgebildet ist, eine Haftreibung zwischen dem zu bearbeitenden Werkstück und dem Absaugaufsatz zu erhöhen. Insbesondere wird durch das Fixierungselement zumindest teilweise die Anlagefläche gebildet. Vorzugsweise ist das Fixierungselement als eine Gummilippe ausgebildet. Alternativ ist auch denkbar, dass das Gehäuse im Bereich der Anlagefläche eine Oberflächenstrukturierung aufweist, die die Reibung erhöht. Vorteilhaft kann dadurch ein Verrutschen des Absaugaufsatzes bzw. des Einsatzwerkzeugs am Werkstück verhindert werden.

Des Weiteren wird vorgeschlagen, dass die Lagereinheit ein unbewegliches, insbesondere unbewegliches und zylindrisches, Lagerelement aufweist, wobei das unbewegliche Lagerelement insbesondere zur spielfreien Lagerung oder Lagerung mit Spiel des Absaugaufsatzes ausgebildet ist. Vorteilhaft kann dadurch ein kostengünstiger Absaugaufsatz realisiert werden.

Erfindungsfemäß weist die Lagereinheit zumindest zwei bewegliche Lagerelemente auf, die relativ zueinander beweglich sind. Insbesondere ist das bewegliche Lagerelement dazu ausgebildet, das Bohrwerkzeug mit einer Kraft zu beaufschlagen. Vorzugsweise ist das bewegliche Lagerelement dazu ausgebildet, das Einsatzwerkzeug zu zentrieren bzw. den Absaugaufsatz bezüglich des Bohrwerkzeugs zu positionieren. Die Länge der Lagereinheit beträgt insbesondere zumindest 0,25, vorzugsweise zumindest 0,5, bevorzugt zumindest 0,75 der Länge des Absaugaufsatzes, um vorteilhaft eine sichere Lagerung bei einer kompakten Bauweise des Absaugaufsatzes zu realisieren. Zudem wird vorgeschlagen, dass der Absaugaufsatz ein Betätigungselement aufweist, über welches die Lage der beweglichen Lagerelemente einstellbar ist. Vorteilhaft kann dadurch die Verbindung manuell angepasst werden.

Des Weiteren wird vorgeschlagen, dass das bewegliche Lagerelement mit einem verformbaren Bereich des Gehäuses gekoppelt ist. Vorteilhaft kann über eine Verformung des Gehäuses die Verbindung des Absaugaufsatzes mit dem Bohrwerkzeug angepasst werden.

Zudem wird vorgeschlagen, dass das bewegliche Lagerelement aus einem Kunststoff, insbesondere zumindest teilweise einstückig mit dem Gehäuse, oder aus einem metallischen Werkstoff ausgebildet ist.

Des Weiteren betrifft die Erfindung ein System mit einer Absaugvorrichtung und einem Absaugaufsatz, wie zuvor beschrieben. Es wird vorgeschlagen, dass eine minimale Ansaugkraft des Absaugaufsatzes an einem zu bearbeitenden Werkstück größer ist, als eine Reibungskraft zwischen dem Absaugaufsatz und dem Einsatzwerkzeug. Vorteilhaft kann dadurch eine Rotation des Absaugaufsatzes während der Bearbeitung des Werkstücks verhindert werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
- Fig. 1: eine schematische Ansicht eines Werkzeugsystems;
- Fig. 2a: einen Längsschnitt eines nicht erfindungsgemäßen Beispiels eines Absaugaufsatzes;
- Fig. 2b: einen weiterer Längsschnitt eines nicht erfindungsgemäßen Beispiels eines Absaugaufsatzes;
- Fig. 2c: eine perspektivische eines nicht erfindungsgemäßen Beispiels eines Absaugaufsatzes;
- Fig. 3a: einen Längsschnitt eines nicht erfindungsgemäßen Beispiels eines Absaugaufsatzes;
- Fig. 3b: eine perspektivische Ansicht des Absaugaufsatzes der Figur 3a;
- Fig. 4: einen Längsschnitt einer Ausführungsform des erfindungsgemäßen Absaugaufsatzes;
- Fig. 5a: einen Querschnitt durch einen Koppelbereich einer Ausführungsform des erfindungsgemäßen Absaugaufsatzes;
- Fig. 5b: einen Querschnitt durch einen Koppelbereich einer Ausführungsform des erfindungsgemäßen Absaugaufsatzes;
- Fig. 5c: einen Querschnitt durch einen Koppelbereich einer Ausführungsform des erfindungsgemäßen Absaugaufsatzes;
- Fig. 5d: einen Querschnitt durch einen Koppelbereich einer Ausführungsform des erfindungsgemäßen Absaugaufsatzes;
- Fig. 5e: einen Querschnitt durch einen Koppelbereich einer Ausführungsform des erfindungsgemäßen Absaugaufsatzes;

### Beschreibung der Ausführungsbeispiele

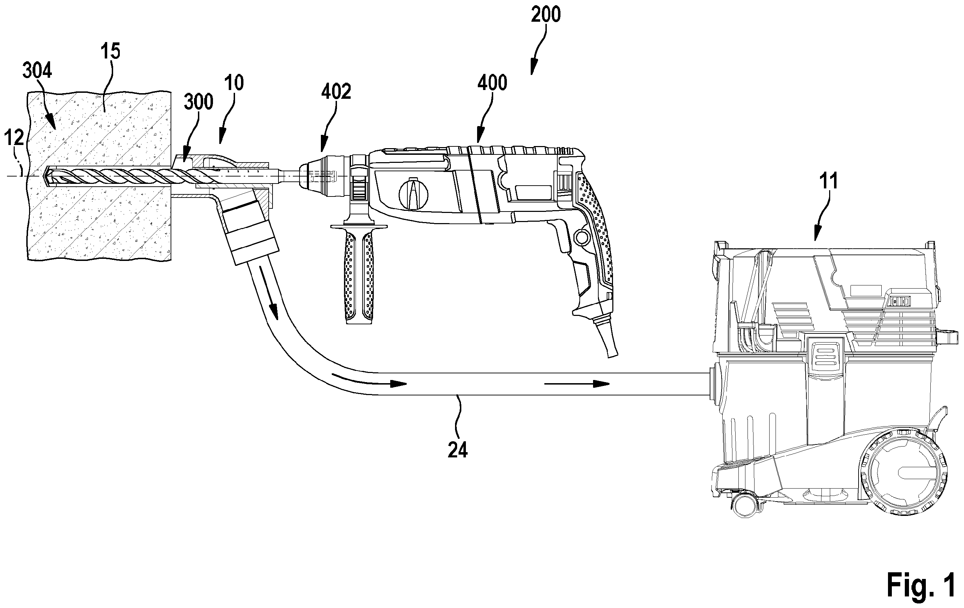

In Fig. 1 ist eine schematische Ansicht eines Werkzeugsystems 200 gezeigt. Das Werkzeugsystem 200 umfasst ein Einsatzwerkzeug 300, eine Handwerkzeugmaschine 400, einen Absaugaufsatz 10 und eine Absaugvorrichtung 11. Die Handwerkzeugmaschine 400 ist beispielhaft als ein Bohrhammer ausgebildet. Die Handwerkzeugmaschine 400 weist eine Werkzeugaufnahme 402 auf, die zur Aufnahme eines beispielhaft als Bohrwerkzeug 302 ausgebildeten Einsatzwerkzeugs 300 ausgebildet ist. Die Handwerkzeugmaschine 400 weist eine nicht dargestellte, einen Elektromotor umfassende Antriebseinheit und ein ein pneumatisches Schlagwerk umfassendes Getriebe auf. Über die Antriebseinheit und das Getriebe kann das Bohrwerkzeug 302 im gekoppelten Zustand rotatorisch um eine Längsachse 12 und linear oszillierend bzw. schlagend entlang der Längsachse 12 angetrieben werden. Das Einsatzwerkzeug 300 ist als ein Bohrwerkzeug 302, insbesondere als ein Gesteinsbohrer, ausgebildet.

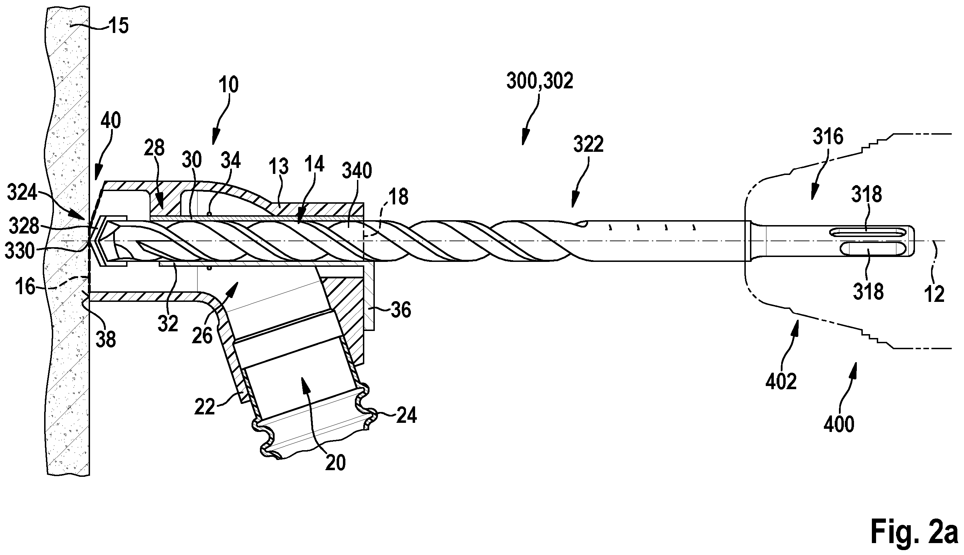

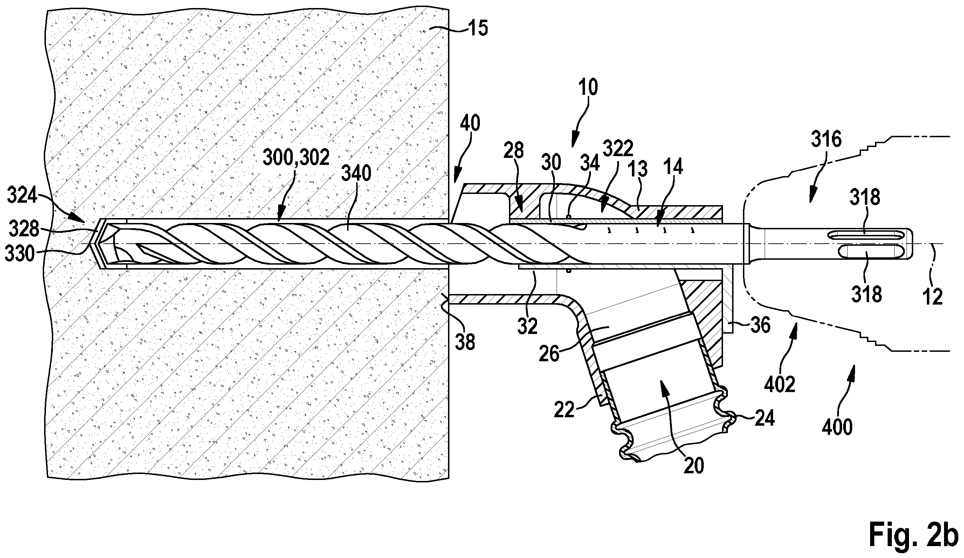

Das mit dem Absaugaufsatz 10 verbundene Bohrwerkzeug 302 ist in Fig. 2a vor dem Bohrvorgang bzw. beim Anbohrvorgang und in Fig. 2b innerhalb des Bohrlochs während des Bohrvorgangs gezeigt. Das Bohrwerkzeug 302 ist insbesondere dazu vorgesehen, ein Bohrloch in einem Werkstück 15, das beispielhaft als ein Gemäuer ausgebildet ist, zu erzeugen. Das Bohrwerkzeug 302 weist ein Einsteckende 316 auf, das zur Kopplung des Bohrwerkzeugs 302 mit der Handwerkzeugmaschine 400 ausgebildet ist. Das Einsteckende 316 ist im Wesentlichen zylinderförmig ausgebildet und weist Formschlusselemente 318 auf, die als längliche Nuten ausgebildet sind. Die Werkzeugaufnahme 402 der Handwerkzeugmaschine 400 weist nicht dargestellte korrespondierende Formschlusselemente auf, die im gekoppelten Zustand mit den Formschlusselementen 318 des Bohrwerkzeugs 302 verbunden sind.

Ausgehend von dem Einsteckende 316 weist das Bohrwerkzeug 302 entlang seiner Längserstreckung einen Schaftbereich 322 und einen Bohrkopf 324 auf. Das vordere Ende des Bohrwerkzeugs 302 wird von dem Bohrkopf 324 und das hintere Ende des Bohrwerkzeugs 302 wird von dem Einsteckende 316 gebildet. Das Bohrwerkzeug 302 weist ein Schaftelement 340 auf, welches den Schaftbereich 322 und das Einsteckende 316 bildet. Das Bohrwerkzeug 302 weist im Schaftbereich 322 eine spiralförmige Förderwendel auf, die als eine sich spiralförmig um die Längsachse 12 ersteckende außenliegende Nut im Schaftelement 340 ausgebildet ist. Alternativ ist auch denkbar, dass das Bohrwerkzeug 302 keine, oder eine anders gestaltete Förderwendel aufweist.

Der Bohrkopf 324 weist stirnseitig einen Schneidkörper 328 auf, der in einer Spitze 330 endet. Der Schneidkörper 328 ist beispielhaft als ein Hartmetall-Einsatz ausgebildet, der in einen stirnseitigen Einschnitt des Schaftelements 340 eingesetzt und mit diesem stoffschlüssig über eine Lötverbindung verbunden ist. Alternativ ist auch denkbar, dass der Schneidkörper 328 als ein Vollhartmetallkopf ausgebildet ist, der an einer stirnseitigen stumpfen Fläche des Schaftelements 340 stoffschlüssig über eine Schweißverbindung befestigt ist. Der Außendurchmesser des Bohrkopfs 324 ist üblicherweise größer ausgebildet, als der Außendurchmesser des Bohrwerkzeugs 302 im Schaftbereich 322, um ein Verkanten oder ein Festfressen des Bohrwerkzeugs 302 im Bohrloch zu verhindern. Insbesondere wird der Außendurchmesser des Bohrkopfs 324 durch den Schneidkörper 328 bestimmt.

Der Absaugaufsatz 10 weist ein Gehäuse 13 auf, das aus einem Kunststoff besteht. Das Gehäuse 13 ist beispielhaft einstückig ausgebildet und weist einen Koppelbereich 14 auf, der zwischen einer stirnseitigen Öffnung 16 und einer rückseitigen Öffnung 18 im Gehäuse 13 angeordnet ist. Im verbundenen Zustand ist das Bohrwerkzeug 302 im Koppelbereich 14 angeordnet. Des Weiteren weist der Absaugaufsatz 10 eine Absaugöffnung 20 auf, die zur Kopplung des Absaugaufsatzes 10 mit der Absaugvorrichtung 11 ausgebildet ist. Die Absaugöffnung 20 ist beispielhaft als Anschlussstutzen 22 ausgebildet. Der Anschlussstutzen 22 ist einstückig mit dem Gehäuse 13 ausgebildet. Der Anschlussstutzen 22 weist insbesondere eine konische Form auf. Insbesondere verkleinert sich der Innendurchmesser des Gehäuses 13 im Bereich des Anschlussstutzens 22 stetig. Über den Anschlussstutzen 22 kann beispielhaft der Absaugaufsatz 10 mittels eines Schlauchs 24 mit der als Industriesauger ausgebildeten Absaugvorrichtung 11 verbunden werden (vgl. Fig. 1).

Die stirnseitige Öffnung 16 ist derart mit der Absaugöffnung 20 verbunden, dass ein Transportkanal 26 gebildet wird. Innerhalb des Transportkanals 26 kann sich ein Luftstrom von der stirnseitigen Öffnung 16 zur Absaugöffnung 20 vorzugsweise im Wesentlichen ungehindert bewegen.

Der Absaugaufsatz 10 weist eine Lagereinheit 28 auf, die zur Lagerung des Absaugaufsatzes 10 am Einsatzwerkzeug 300 ausgebildet ist. Der Koppelbereich 14 wird radial durch die Lagereinheit 28 und axial durch die stirnseitige Öffnung 16 und die rückseitige Öffnung 18 begrenzt. Die Lagereinheit 28 ist als ein Radiallager ausgebildet. Die Lagereinheit 28 umfasst ein unbewegliches Lagerelement 30 und ein bewegliches Lagerelement 32, die mittels eines Rückstellelements 34 verbunden sind. Das Verhältnis der Länge der Lagereinheit zur Länge des Absaugaufsatzes beträgt ca. 0,75. Das unbewegliche Lagerelement 30 ist als eine V-förmige Schiene ausgebildet, die unbeweglich am Gehäuse 13 des Absaugaufsatzes 10 ausgebildet ist. Das Bohrwerkzeug 302 liegt tangential an zwei Seitenflächen des unbeweglichen Lagerelements 30 an. Alternativ ist auch denkbar, dass das unbewegliche Lagerelement 30 einstückig mit dem Gehäuse 13 ausgebildet ist. Das bewegliche Lagerelement 32 ist ebenfalls als eine Schiene ausgebildet, die einen kreisbogenförmigen Querschnitt aufweist. Das Rückstellelement 34 ist insbesondere als eine Federklammer ausgebildet, die die Lagerelemente 30, 32 zumindest teilweise umgreift. Das Rückstellelement 34 ist innerhalb des Absaugaufsatzes 10 angeordnet. Das Rückstellelement 34 beaufschlagt das bewegliche Lagerelement 32 radial mit einer Kraft, insbesondere mit einer Kraft die in Richtung des unbeweglichen Lagerelements 30 gerichtet ist. Insbesondere wird das bewegliche Lagerelement 32 durch das Rückstellelement 34 gehalten. Das bewegliche Lagerelement 32 ist insbesondere verkippbar ausgebildet. Das unbewegliche Lagerelement 30 schließt mit der rückseitigen Öffnung 18 ab, während das bewegliche Lagerelement 32 durch die rückseitige Öffnung 18 nach außen dringt und außerhalb des Gehäuses 13 ein Betätigungselement 36 bildet. Die Bewegung des Betätigungselements 36 ist mit der des beweglichen Lagerelements 32 vorzugsweise gekoppelt. Insbesondere sind das Betätigungselement 36 und das bewegliche Lagerelement 32 einstückig ausgebildet. Über das Betätigungselement 36 kann auf das bewegliche Lagerelement 32 manuell eine Kraftwirkung erfolgen, die der Kraft des Rückstellelements 34 entgegengerichtet ist.

Vorzugsweise ist der Absaugaufsatz 10 derart ausgebildet, dass er mit einem mit der Handwerkzeugmaschine 400 verbundenen Bohrwerkzeug 302 verbindbar ist. Zur Herstellung der Verbindung wird der Absaugaufsatz 10 mit seiner rückseitigen Öffnung 18 über den Bohrkopf 324 des Bohrwerkzeugs 302 geschoben. Wie bereits beschrieben, weist das Bohrwerkzeug 302 im Bereich des Bohrkopfs 324 einen größeren Durchmesser auf, als das Bohrwerkzeug 302 im Schaftbereich 322. Um den Abstand der Lagerelemente 30, 32 im Bereich der rückseitigen Öffnung 18 zu erhöhen bzw. zu maximieren, kann die Position des beweglichen Lagerelements 32 über das Betätigungselement 36 manuell geregelt werden. Während der Bohrkopf 324 zwischen den Lagerelementen 30, 32 verschoben wird, wird deren Abstand durch den Bohrkopf 324 im Wesentlichen konstant gehalten. Wird das Absaugaufsatz 10 weiter aufgeschoben, verlässt der Bohrkopf 324 die Lagereinheit 28. Da das Bohrwerkzeug 302 im Schaftbereich einen kleineren und konstanten Durchmesser aufweist, wird daraufhin mittels des Rückstellelements 34 das bewegliche Lagerelement 32 in Richtung des Bohrwerkzeugs 302 gedrückt, so dass eine im Wesentlichen spielfreie Lagerung des Absaugaufsatzes 10 auf dem Bohrwerkzeug 302 entsteht. Der Absaugaufsatz 10 ist somit axial beweglich auf dem Bohrwerkzeug 302 gelagert. Zudem entspricht die Lagereinheit 28 im Wesentlichen einem Gleitlager, sodass eine Rotation des Bohrwerkzeugs 302 während der Bearbeitung des Werkstücks 15 innerhalb des Absaugaufsatzes 10 ermöglicht ist. Vorteilhaft wird durch die spielfreie Lagerung das Bohrwerkzeug 302 bzw. der Absaugaufsatz 10 zentriert.

Bevor der Bohrvorgang gestartet wird, kann der Absaugaufsatz 10 vorteilhaft auf dem Bohrwerkzeug 302 nach hinten in Richtung der Handwerkzeugmaschine 400 geschoben werden, sodass eine freie Sicht auf die Spitze 330 des Bohrwerkzeugs 302 vorliegt. Die Spitze 330 kann somit an der gewünschten Position an dem Werkstück 15 angesetzt werden. Anschließend kann bei eingeschalteter Absaugvorrichtung 11 der Absaugaufsatz 10 nach vorne geschoben werden, bis eine Anlagefläche 38 an dem Werkstück 15 anliegt. Die Anlagefläche 38 ist eben ausgebildet und im Bereich der stirnseitigen Öffnung 16 angeordnet. Durch die Absaugvorrichtung 11 wird innerhalb des Transportkanals 26 ein Unterdruck erzeugt, über den der Absaugaufsatz 10 während des Bohrvorgangs an dem Werkstück 15 gehalten wird. Vorteilhaft unterstützt der Absaugaufsatz 10 den Benutzer bei der Positionierung des Bohrwerkzeugs 302 am Werkstück 15, da das im Absaugaufsatz 10 zentrierte Bohrwerkzeug 302 durch den Unterdruck deutlich besser gegen ein Verrutschen geschützt ist. Zudem weist der Absaugaufsatz 10 im Bereich der stirnseitigen Öffnung 16 eine Aussparung 40 auf. Die Aussparung 40 unterbricht die ebene Anlagefläche 38 und ist beispielhaft oberhalb der Längsachse 12 angeordnet, während die Absaugöffnung 20 unterhalb der Längsachse 12 angeordnet ist. Die Aussparung 40 ist insbesondere dazu ausgebildet, den Luftvolumenstrom im Transportkanal 26 zu erhöhen.

In Fig. 2b ist das Werkzeugsystem 200 während des Bohrvorgangs gezeigt. Mit fortschreitender Tiefe bewegt sich das Bohrwerkzeug 302 in das Werkstück 15 bzw. das Bohrloch hinein, während durch den Unterdruck der Absaugaufsatz 10 an das Werkstück 15 gepresst ist. Es erfolgt somit eine Relativbewegung des Bohrwerkzeugs 302 zu dem Absaugaufsatz 10. Da der Absaugaufsatz 10 an dem Werkstück über die Anlagefläche 38 anliegt, kann vorteilhaft sämtlicher anfallender Bohrstaub oder Bohrklein effektiv durch den Absaugaufsatz 10 aufgenommen und abgesaugt werden.

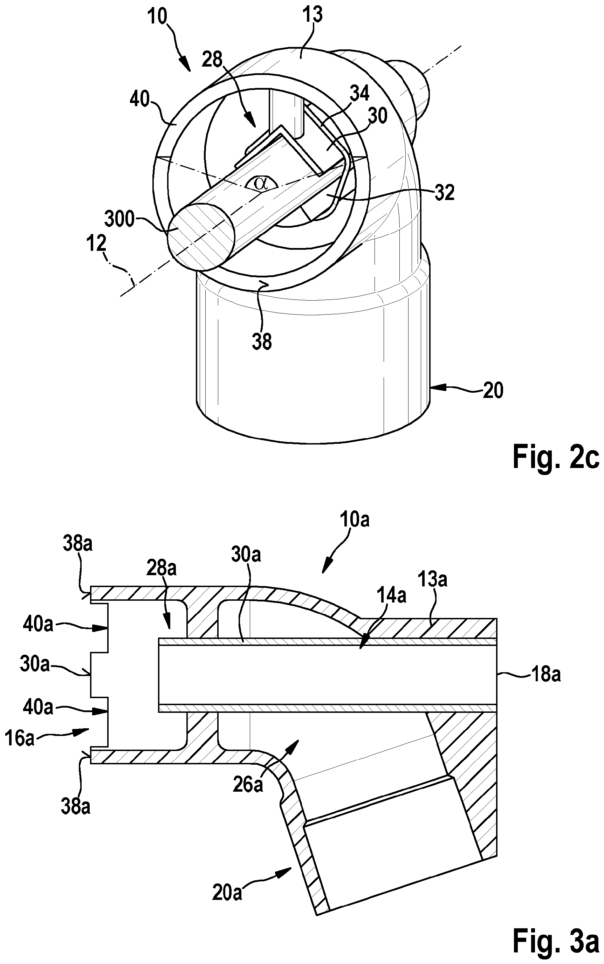

In Fig. 2c ist eine perspektivische Ansicht der Vorderseite des Absaugaufsatzes 10 gezeigt. Das Einsatzwerkzeug 300 ist in dieser und in den nachfolgenden Zeichnungen schematisch eingezeichnet. Im Bereich der stirnseitigen Öffnung 16 weist der Absaugaufsatz 10 insbesondere eine einzelne größere Aussparung 40 auf. Bezüglich der Längsachse weist die Aussparung 40 einen Mittelpunktswinkel α von über 120° auf. Die Aussparung 40 unterbricht die ebene Anlagefläche 38 derart, dass ein Luftstrom in den Absaugaufsatz 10 eintreten kann. Die Anlagefläche 38 ist kreisbogenförmig ausgebildet und erstreckt sich im Wesentlichen senkrecht zu der Längsachse 12.

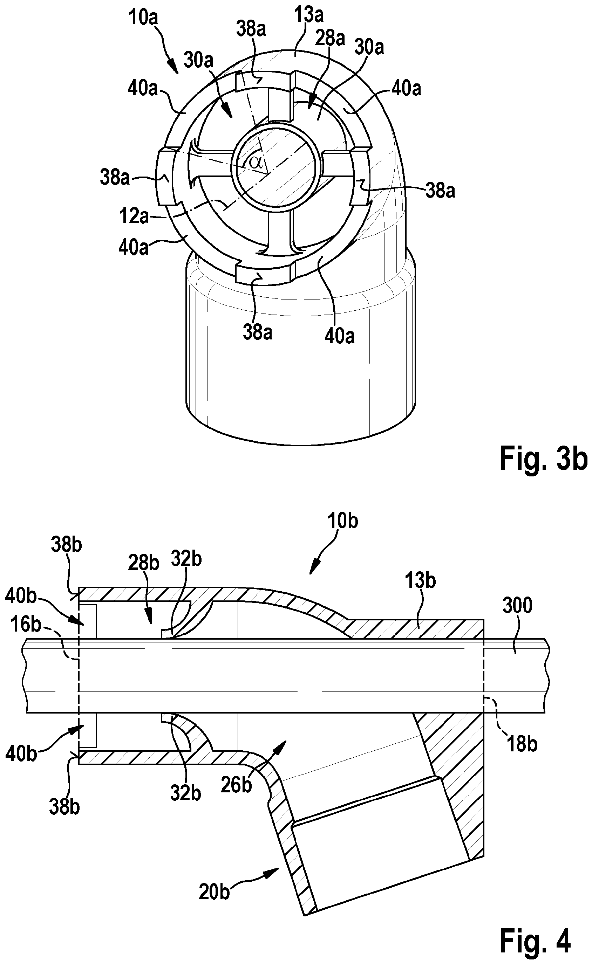

In Fig. 3a und Fig. 3b ist ein Beispiel eines Absaugaufsatzes 10a in einem Längsschnitt und einer perspektivischen Ansicht der Front gezeigt. Der Absaugaufsatz 10a unterscheidet sich insbesondere durch die Ausbildung der Lagereinheit 28a und der Anlagefläche 38a. Die Lagereinheit 28a weist ein einzelnes unbewegliches Lagerelement 30a auf. Das Lagerelement 30a ist beispielhaft aus einem metallischen Werkstoff ausgebildet und stoffschlüssig mit dem Gehäuse 13a aus Kunststoff verbunden. Es ist allerdings ebenfalls denkbar, dass das bewegliche Lagerelement 30a einstückig mit dem Gehäuse 13a und somit auch aus Kunststoff ausgebildet ist. Das Lagerelement 30a ist zylinderförmig ausgebildet. Insbesondere ist das Lagerelement 30a als ein Rohr mit einem konstanten Durchmesser ausgebildet. Der Durchmesser des Lagerelements 30a ist derart gewählt, dass der Bohrkopf 324 des Bohrwerkzeugs 302 über die rückseitige Öffnung 18a aufnehmbar ist. Ein Einsatzwerkzeug 300, bei dem der Durchmesser des Schaftbereichs 322 dem Durchmesser des Bohrkopfs 324 entspricht wird somit spielfrei aufgenommen, falls der Durchmesser des Bohrkopfs 324 größer ist, wird das Einsatzwerkzeug 300 mit Spiel aufgenommen oder von hinten in die stirnseitige Öffnung 16 eingebracht.

Im Bereich der stirnseitigen Öffnung 16 weist der Absaugaufsatz 10a vier kleiner Aussparungen 40a auf. Die Aussparungen 40a weisen bezüglich der Längsachse 12 einen Mittelpunktswinkel α von unter 70° auf. Die Anlagefläche 38a wird somit durch die Aussparungen 40a an vier Stellen in Umfangsrichtung unterbrochen. Bezüglich der Längsachse 12a sind die vier Teilstücke der Anlagefläche 38a paarweise einander gegenüberliegend angeordnet. Vorteilhaft kann dadurch ein Verkippen des Absaugaufsatzes 10a am Werkstück 15 verhindert werden. Es sind allerdings auch eine abweichende Anzahl von Aussparungen 40a und damit Anlageflächen 38a denkbar.

Das Gehäuse 13a des Absaugaufsatzes 10a ist beispielhaft einstückig ausgebildet. Es ist allerdings auch denkbar, dass das Gehäuse 13a aus zwei Gehäusehalbschalen ausgebildet ist, die jeweils ein unbewegliches Lagerelement 30a aufweisen, dass als Halbrohr ausgebildet ist. Die beiden Gehäusehalbschalen können oberhalb der Längsachse 12a ein Scharnier aufweisen und unterhalb der Längsachse 12a Rastmittel zur Ausbildung einer Rastverbindung der beiden Gehäusehalbschalen. Vorteilhaft kann dadurch ein Absaugaufsatz realisiert werden, der direkt mit dem Schaftbereich 322 des Einsatzwerkzeugs 300 verbindbar ist.

In Fig. 4 ist eine Ausführungsform des Absaugaufsatzes 10b gezeigt. Diese Ausführungsform unterscheidet sich insbesondere durch die Ausbildung der Lagereinheit 28b. Die Lagereinheit 28b umfasst zwei bewegliche Lagerelemente 32b. Die beiden Lagerelemente 32b sind einander gegenüberliegend angeordnet. Die Lagerelemente 32b sind einstückig mit dem Gehäuse 13b ausgebildet, wobei das Gehäuse 13b aus einem elastischen Kunststoff besteht.

Die beweglichen Lagerelemente 32b sind als Stützelemente ausgebildet, die sich ausgehend von einer den Transportkanal 26b begrenzenden Wandung radial nach innen erstrecken und das Einsatzwerkzeug 300 mit einer Kraft beaufschlagen, um dieses zu fixieren.

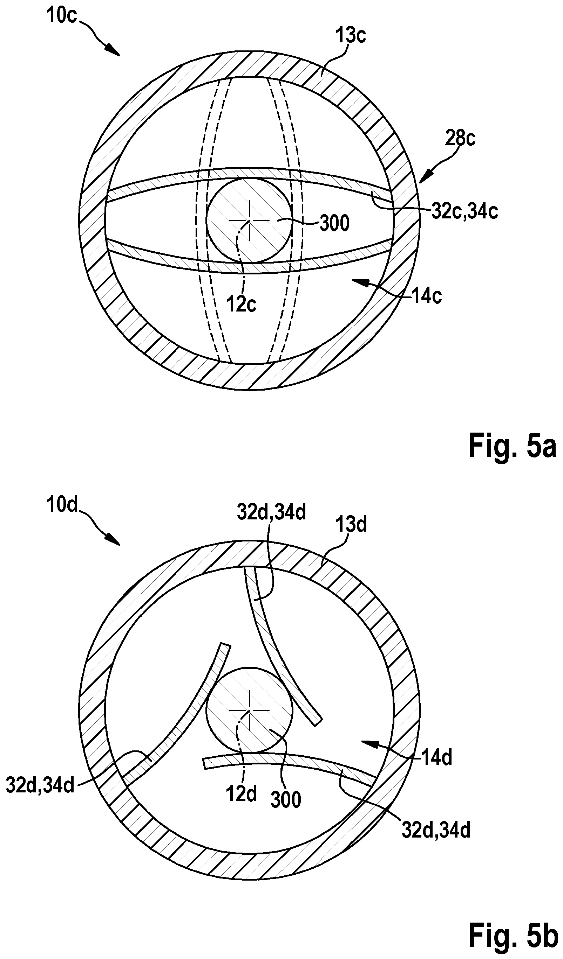

In Fig. 5a bis 5e werden weitere Ausführungsformen der Lagereinheit anhand von Querschnitten durch den Koppelbereich beschrieben.

In Fig. 5a weist die Lagereinheit 28c zwei bewegliche Lagerelemente 32c auf, die als federnde Blechstreifen ausgebildet sind. Die Lagerelemente 32c sind relativ zueinander und zu dem Gehäuse 13c des Absaugaufsatzes 10c beweglich ausgebildet. Die beiden Lagerelemente 32c sind insbesondere im Wesentlichen parallel zueinander angeordnet. Die Lagerelemente 32c sind formschlüssig mit dem Gehäuse 13c verbunden. Wird der Absaugaufsatz 10c mit einem Bohrwerkzeug 302 verbunden, das einen größeren Durchmesser aufweist, als ein Abstand zwischen den Lagerelementen 32c im nicht verbundenen Zustand, so werden die Lagerelemente 32c durch das Bohrwerkzeug 302 radial nach außen bewegt, sodass sich der Abstand der Lagerelemente 32c vergrößert. Durch die federnde Eigenschaft der Lagerelemente 32c entsteht dadurch eine radial entgegengerichtete Rückstellkraft durch die beweglichen Lagerelemente 32c auf das Bohrwerkzeug 302. Vorteilhaft findet hierdurch eine Zentrierung statt. Somit ist das bewegliche Lagerelement 32c einstückig mit dem Rückstellelement 34c ausgebildet. In anderen Worten wird die Funktion des beweglichen Lagerelements 32c als auch des Rückstellelements 34c von demselben Bauteil ausgeübt. Alternativ ist zudem denkbar, dass die Lagereinheit 28c ein weiteres paar Lagerelemente aufweist, das sich senkrecht zu dem ersten erstreckt (mittels gestrichelter Linie angedeutet).

In Fig. 5b weist die Lagereinheit 28d ebenfalls bewegliche Lagerelemente 32d auf, die einstückig mit dem Rückstellelement 34d ausgebildet sind. Die Lagerelemente 32d sind als Federbalken, insbesondere als metallische Federbalken, ausgebildet und an einem ersten Ende formschlüssig mit dem Gehäuse 13d verbunden. Alternativ ist auch denkbar, dass die Lagerelemente 32d einstückig mit dem Gehäuse 13d und insbesondere aus Kunststoff ausgebildet sind. Die Lagereinheit 28d weist insbesondere drei Lagerelemente 32d auf, die symmetrische um die Längsachse 12d herum angeordnet sind. Im verbundenen Zustand liegen die Rückstellelemente 34d an einem freien zweiten, dem ersten Ende gegenüberliegenden Ende tangential am Bohrwerkzeug 302 an. Die Lagerelemente 32d werden in Abhängigkeit des Durchmessers des Bohrwerkzeugs 300 durchgebogen und beaufschlagen diesen wiederum mit einer Kraft basierend auf dem Grad der Verbiegung.

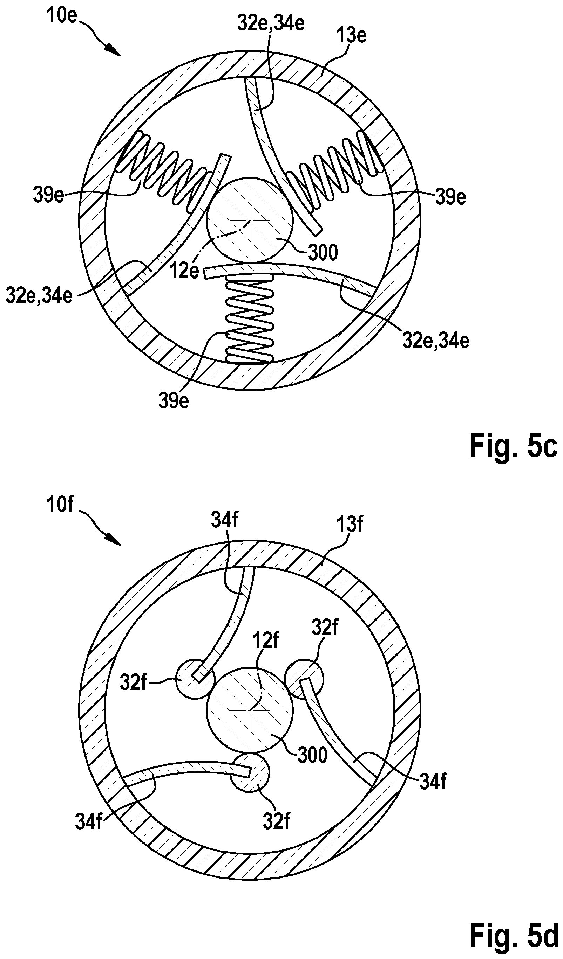

In Fig. 5c ist eine weitere alternative Ausführungsform der Lagereinheit 28e gezeigt, die im Wesentlichen der Lagereinheit der vorherigen Ausführungsform entspricht. Die Lagereinheit 28e weist jedoch zusätzliche Rückstellelemente 39e auf, die die als Federbalken ausgebildeten beweglichen Lagerelemente 32e zusätzlich mit einer Rückstellkraft beaufschlagen. Die zusätzlichen Rückstellelemente 39e sind beispielhaft als Spiralfedern ausgebildet. Alternativ sind jedoch auch andere Ausführungen der zusätzlichen Rückstellelemente 39e denkbar, die anstelle der Spiralfeder zum Einsatz kommen könnten. Vorteilhaft kann dadurch ein besonders langlebiger Absaugaufsatz 10e realisiert werden.

Die in Fig. 5d dargestellte Lagereinheit 28f weist drei walzenförmige bewegliche Lagerelemente 32f auf. Die Lagerelemente 32f sind drehbar gelagert, wobei die Drehachse der Lagerelemente 32f parallel zu der Längsachse 12f verläuft. Die Lagerelemente 32f sind an einem Ende der als Federblech ausgebildeten Rückstellelemente 34f angeordnet. Die Lagereinheit 28f weist drei bewegliche Lagerelemente 32f auf, die in Umfangsrichtung gleichmäßig voneinander beabstandet sind. Vorteilhaft kann durch die drehbaren Lagerelemente 32f der Verschleiß verringert werden.

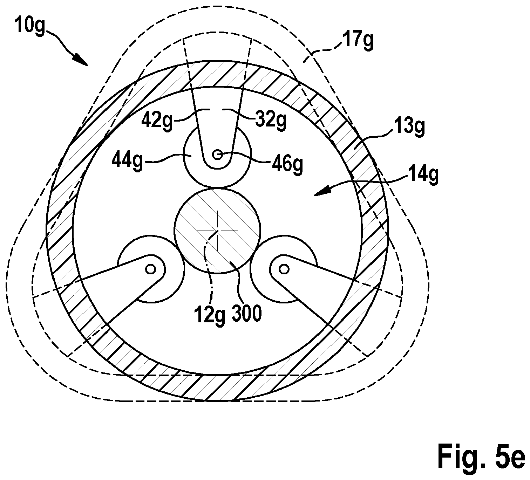

In Fig. 5e ist eine weitere alternative Ausführungsform der Lagereinheit 28g gezeigt. Das Gehäuse 13g ist mehrteilig ausgebildet und weist zumindest ein verformbares Gehäuseteil 17g auf. Das verformbare Gehäuseteil 17g ist insbesondere derart ausgebildet, dass es über einen Druck von außen von einer rundlichen Form in eine im Wesentlichen dreieckige Form gebracht werden kann. An der Innenseite des verformbaren Gehäuseteils 17g sind drei Lagerelemente 32g befestigt, die über eine Verformung des Gehäuseteils 17g in unterschiedliche Positionen bewegbar sind. Die Lagerelemente 32g sind jeweils als Arme 42g ausgebildet, die an ihrem Ende eine drehbare Walze 44g aufweisen, wobei die Walze 44g an dem Bohrwerkzeug 302 anliegt. Die Walze 44g ist drehbar um eine Walzachse 46g ausgebildet, die sich parallel zu der Längsachse 12g erstreckt. Über die Verformung des Gehäuseteils 17g kann insbesondere der Abstand der Lagerelemente 32g, insbesondere der Walzen 46g, eingestellt werden, so dass das Bohrwerkzeug 300 im Wesentlichen spielfrei gelagert wird.

## Patentansprüche

1. Absaugaufsatz für ein Einsatzwerkzeug (300), insbesondere ein Bohrwerkzeug (302), umfassend ein Gehäuse (13) mit einer stirnseitigen Öffnung (16), die zur Aufnahme des Einsatzwerkzeugs (300) ausgebildet ist, eine Lagereinheit (28) zur Lagerung des Absaugaufsatzes (10) am Einsatzwerkzeug (300), eine Absaugöffnung (20) zur Kopplung des Absaugaufsatzes (10) mit einer Absaugvorrichtung (11), wobei die stirnseitige Öffnung (16) und die Absaugöffnung (20) einen Transportkanal (26) bilden, wobei
der Absaugaufsatz (10) mittels der Lagereinheit (28) derart axial beweglich und drehbar auf dem Einsatzwerkzeug (300) gelagert ist, dass sich die Position des Absaugaufsatzes (10) relativ zum Einsatzwerkzeug (300) mit einer zunehmenden Bohrlochtiefe ändert, **dadurch gekennzeichnet, dass** die Lagereinheit (28) zumindest zwei bewegliche Lagerelemente (32) aufweist, die relativ zueinander beweglich sind die insbesondere zur spielfreien Lagerung des Absaugaufsatzes (10) ausgebildet sind.

2. Absaugaufsatz nach einem der vorhergehenden Ansprüche, **dadurch gekennzeichnet, dass** die stirnseitige Öffnung (16) eine im Wesentlichen ebene Anlagefläche (38) aufweist und die Anlagefläche (38) eine Längsachse (12) des Absaugaufsatzes (10) umschließt, wobei die Längsachse (12) insbesondere einer Arbeitsachse des Einsatzwerkzeugs (300) entspricht.

3. Absaugaufsatz nach Anspruch 2, **dadurch gekennzeichnet, dass** das Gehäuse (13) im Bereich der stirnseitigen Öffnung (16) zumindest eine Aussparung (40) aufweist, die die Anlagefläche (38) unterbricht.

4. Absaugaufsatz nach Anspruch 3, **dadurch gekennzeichnet, dass** die Aussparung (40) einen Mittelpunktswinkel (a) um die Längsachse (12) von zumindest 10°, insbesondere zumindest 30°, vorzugsweise zumindest 60°, bevorzugt zumindest 90°, einnimmt.

5. Absaugaufsatz nach einem Ansprüche 2 bis 4, **dadurch gekennzeichnet, dass** die Anlagefläche (38) durch zumindest eine senkrecht zu der Längsachse (12) verlaufenden Gerade zweimal geschnitten wird.

6. Absaugaufsatz nach einem der vorhergehenden Ansprüche, **dadurch gekennzeichnet, dass** das Gehäuse (13) im Bereich der stirnseitigen Öffnung (16) ein Fixierungselement aufweist, das dazu ausgebildet ist, eine Haftreibung zwischen dem zu bearbeitenden Werkstück und dem Absaugaufsatz zu erhöhen.

7. Absaugaufsatz nach Anspruch 6, **dadurch gekennzeichnet, dass** das Fixierungselement als eine Gummilippe ausgebildet ist.

8. Absaugaufsatz nach einem der vorhergehenden Ansprüche, **dadurch gekennzeichnet, dass** die Lagereinheit (28a) ein unbewegliches Lagerelement (30a) aufweist, wobei das unbewegliche Lagerelement (30a) insbesondere zur spielfreien Lagerung oder zur Lagerung mit Spiel des Absaugaufsatzes (10) ausgebildet ist.

9. Absaugaufsatz nach einem der vorhergehenden Ansprüche, **dadurch gekennzeichnet, dass** die beweglichen Lagerelemente (32g) mit einem verformbaren Bereich des Gehäuses (17g) gekoppelt sind.

10. Absaugaufsatz nach einem der vorhergehenden Ansprüche, **dadurch gekennzeichnet, dass** die beweglichen Lagerelemente (32b) aus einem Kunststoff ausgebildet sind, insbesondere zumindest teilweise einstückig mit dem Gehäuse (13b) ausgebildet sind.

11. Absaugaufsatz nach einem der vorhergehenden Ansprüche, **dadurch gekennzeichnet, dass** die beweglichen Lagerelemente (32c) zumindest teilweise aus einem metallischen Werkstoff ausgebildet sind.

12. System umfassend eine Absaugvorrichtung (11) und einen Absaugaufsatz (10) nach einem der vorherigen Ansprüche, **dadurch gekennzeichnet, dass** eine minimale Ansaugkraft des Absaugaufsatzes (10) an einem zu bearbeitenden Werkstück (15) größer ist, als eine Reibungskraft zwischen dem Absaugaufsatz (10) und dem Einsatzwerkzeug (300).

## Claims

1. Suction-extraction attachment for an insertion tool (300), in particular a drilling tool (302), comprising a housing (13) with an end-side opening (16) which is designed for receiving the insertion tool (300), a bearing unit (28) for mounting the suction-extraction attachment (10) on the insertion tool (300), a suction-extraction opening (20) for coupling the suction-extraction attachment (10) to a suction-extraction device (11), wherein the end-side opening (16) and the suction-extraction opening (20) form a transport channel (26), wherein the suction-extraction attachment (10) is mounted on the insertion tool (300) in an axially movable and rotatable manner by means of the bearing unit (28) such that the position of the suction-extraction attachment (10) relative to the insertion tool (300) changes as a drill hole depth increases, **characterized in that** the bearing unit (28) has at least two movable bearing elements (32) which are movable relative to each other and are designed in particular for the play-free mounting of the suction-extraction attachment (10).

2. Suction-extraction attachment according to one of the preceding claims, **characterized in that** the end-side opening (16) has a substantially planar contact surface (38), and the contact surface (38) surrounds a longitudinal axis (12) of the suction-extraction attachment (10), wherein the longitudinal axis (12) corresponds in particular to a working axis of the insertion tool (300).

3. Suction-extraction attachment according to Claim 2, **characterized in that** the housing (13) has, in the region of the end-side opening (16), at least one cutout (40) which interrupts the contact surface (38) .

4. Suction-extraction attachment according to Claim 3, **characterized in that** the cutout (40) takes up a centre angle (a) about the longitudinal axis (12) of at least 10°, in particular at least 30°, preferably at least 60°, preferably at least 90°.

5. Suction-extraction attachment according to one of Claims 2 to 4, **characterized in that** the contact surface (38) is intercepted twice by at least one straight line running perpendicularly to the longitudinal axis (12).

6. Suction-extraction attachment according to one of the preceding claims, **characterized in that** the housing (13) has, in the region of the end-side opening (16), a fixing element which is designed to increase static friction between the workpiece to be processed and the suction-extraction attachment.

7. Suction-extraction attachment according to Claim 6, **characterized in that** the fixing element is designed as a rubber lip.

8. Suction-extraction attachment according to one of the preceding claims, **characterized in that** the bearing unit (28a) has an immovable bearing element (30a), wherein the immovable bearing element (30a) is designed in particular for the play-free mounting or for the mounting with play of the suction-extraction attachment (10).

9. Suction-extraction attachment according to one of the preceding claims, **characterized in that** the movable bearing elements (32g) are coupled to a deformable region of the housing (17g).

10. Suction-extraction attachment according to one of the preceding claims, **characterized in that** the movable bearing elements (32b) are formed from a plastic, in particular are at least partially formed integrally with the housing (13b).

11. Suction-extraction attachment according to one of the preceding claims, **characterized in that** the movable bearing elements (32c) are at least partially formed from a metallic material.

12. System comprising a suction-extraction device (11) and a suction-extraction attachment (10) according to one of the preceding claims, **characterized in that** a minimal suction force of the suction-extraction attachment (10) on a workpiece (15) to be processed is greater than a frictional force between the suction-extraction attachment (10) and the insertion tool (300).

## Revendications

1. Adaptateur d'aspiration pour un outil d'insertion (300), en particulier un outil de perçage (302), comprenant un boîtier (13) avec une ouverture frontale (16), qui est conçue pour recevoir l'outil d'insertion (300), une unité (28) formant palier pour le montage de l'adaptateur d'aspiration (10) sur l'outil d'insertion (300), une ouverture d'aspiration (20) pour la liaison de l'adaptateur d'aspiration (10) à un dispositif d'aspiration (11), l'ouverture frontale (16) et l'ouverture d'aspiration (20) formant un canal de transport (26), dans lequel
l'adaptateur d'aspiration (10) est monté au moyen de l'unité (28) formant palier de manière à être apte à se déplacer axialement et à être apte à tourner sur l'outil d'insertion (300) de telle sorte que la position de l'adaptateur d'aspiration (10) par rapport à l'outil d'insertion (300) varie avec l'augmentation d'une profondeur de trou de forage, **caractérisé en ce que** l'unité (28) formant palier présente au moins deux éléments de palier mobiles (32) qui sont mobiles l'un par rapport à l'autre et qui sont conçus en particulier pour le montage sans jeu de l'adaptateur d'aspiration (10).

2. Adaptateur d'aspiration selon l'une des revendications précédentes, **caractérisé en ce que** l'ouverture frontale (16) présente une surface d'appui (38) sensiblement plane et la surface d'appui (38) entoure un axe longitudinal (12) de l'adaptateur d'aspiration (10), l'axe longitudinal (12) correspondant en particulier à un axe de travail de l'outil d'insertion (300) .

3. Adaptateur d'aspiration selon la revendication 2, **caractérisé en ce que** le boîtier (13) présente, dans la zone de l'ouverture frontale (16), au moins un évidement (40) qui interrompt la surface d'appui (38).

4. Adaptateur d'aspiration selon la revendication 3, **caractérisé en ce que** l'évidement (40) forme un angle au centre (a) autour de l'axe longitudinal (12) d'au moins 10°, en particulier d'au moins 30°, de préférence d'au moins 60°, de façon encore préférée d'au moins 90°.

5. Adaptateur d'aspiration selon l'une des revendications 2 à 4, **caractérisé en ce que** la surface d'appui (38) est coupée deux fois par au moins une droite s'étendant perpendiculairement à l'axe longitudinal (12) .

6. Adaptateur d'aspiration selon l'une des revendications précédentes, **caractérisé en ce que** le boîtier (13) présente, dans la zone de l'ouverture frontale (16), un élément de fixation qui est conçu pour augmenter un frottement d'adhérence entre la pièce de travail et l'adaptateur d'aspiration.

7. Adaptateur d'aspiration selon la revendication 6, **caractérisé en ce que** l'élément de fixation est conçu sous la forme d'une lèvre en caoutchouc.

8. Adaptateur d'aspiration selon l'une des revendications précédentes, **caractérisé en ce que** l'unité de support (28a) comprend un élément de support fixe (30a), l'élément de support fixe (30a) étant notamment conçu pour le support sans jeu ou pour le support avec jeu de l'adaptateur d'aspiration (10).

9. Adaptateur d'aspiration selon l'une des revendications précédentes, **caractérisé en ce que** les éléments de palier mobiles (32g) sont reliés à une zone déformable du boîtier (17g).

10. Adaptateur d'aspiration selon l'une des revendications précédentes, **caractérisé en ce que** les éléments de palier mobiles (32b) sont réalisés en matière plastique, notamment sont réalisés au moins partiellement d'un seul tenant avec le boîtier (13b).

11. Adaptateur d'aspiration selon l'une des revendications précédentes, **caractérisé en ce que** les éléments de palier mobiles (32c) sont réalisés au moins partiellement en un matériau métallique.

12. Système comprenant un dispositif d'aspiration (11) et un adaptateur d'aspiration (10) selon l'une des revendications précédentes, **caractérisé en ce qu'**une force d'aspiration minimale de l'adaptateur d'aspiration (10) sur une pièce à travailler (15) est supérieure à une force de frottement entre l'adaptateur d'aspiration (10) et l'outil d'insertion (300).
